# EUROPÄISCHE PATENTSCHRIFT

(11) **EP 1 498 836 B1**
(45) Veröffentlichungstag und Bekanntmachung des Hinweises auf die Patenterteilung: **28.09.2005**
(21) Anmeldenummer: 03015951.1
(22) Anmeldetag: 14.07.2003
(51) Int. Cl.: G06K 7/00

(54) **Verfahren zur Datenübertragung zwischen RFID Schreib/Lese-Station und dessen Funktionseinheit, Schreib/Lese-Station und Funktionseinheit**
Data transferring method between RFID reader/writer and its functional unit, reader/writer and functional unit
Procédé de transmission de données entre lecteur/enregistreur RFID et son unité fonctionnelle, lecteur/enregistreur et unité fonctionnelle

(43) Veröffentlichungstag der Anmeldung: 19.01.2005
(73) Patentinhaber: Feig Electronic GmbH, 35781 Weilburg-Waldhausen (DE)
(72) Erfinder: Wennrich, Andreas, 65554 Limburg (DE); Desch, Markus, 65527 Niedernhausen (DE)
(74) Vertreter: Knefel, Cordula

(56) Entgegenhaltungen:
- EP-A- 1 139 277
- EP-A- 1 298 573
- US-A1- 2003 001 726

## Beschreibung

Die Erfindung betrifft ein Verfahren zur Datenübertragung, eine Schreib/Lese-Station zur Durchführung des Verfahrens und eine Funktionseinheit.

Gemäß dem Stand der Technik ist bei einigen RFID-Systemen (Radio Frequency Identification) die Antenne zur Kommunikation mit dem Transponder von einer Schreib/Lese-Station (Reader) mittels einer Leitung, die meistens als Koaxialkabel ausgebildet ist, abgesetzt. Solche Konstellationen finden sich meist dort, wo passive Transponder über relativ große Distanzen, das heißt beispielsweise 0,7 bis 1,5 Meter gelesen oder geschrieben werden sollen.

In derartigen Applikationen sind neben der Schreib/Lese-Station und Antenne häufig noch weitere Komponenten zum Betrieb des Systems notwendig. So werden zum Beispiel häufig so genannte Abgleicheinrichtungen oder Multiplexer benötigt.

Die Aufgabe einer Abgleicheinrichtung ist zum Beispiel, die Antenne auf einer bestimmten Resonanzfrequenz zu halten. Andererseits darf die Abgleicheinrichtung den Antennenabgleich nur dann durchführen, wenn gerade keine Kommunikation zwischen Schreib/Lese-Station und Transponder aktiv ist.

Mit einem Multiplexer können an einer Schreib/Lese-Station mehrere Antennen angeschlossen und nacheinander angesteuert werden. Gemäß dem Stand der Technik (EP 1 139 277 A2) ist der Einsatz eines Multiplexers vorgesehen, der zwischen Schreib/Lese-Station und mehreren Antennen angeordnet ist und es ermöglicht, zwischen mehreren Antennen umzuschalten. Gemäß diesem Stand der Technik ist ebenfalls der Einsatz einer Abgleicheinheit vorgesehen, die Zustandsdaten mit einer Schreib/Lese-Station austauschen kann. In der genannten Druckschrift ist jedoch nicht ausgeführt, in welcher Art und Weise und über welchen Kommunikationskanal der Datenaustausch zwischen Schreib/Lese-Station und Multiplexer beziehungsweise Abgleicheinheit stattfindet.

Auch die zum Stand der Technik gehörende Druckschrift EP 1 298 573 A2 schlägt den Einsatz eines Multiplexers vor, ohne jedoch auf dessen Ausführung näher einzugehen.

Zum Stand der Technik zählen auch Lösungen, bei denen Multiplexer bereits in die Schreib/Lese-Station integriert sind. Eine solche Lösung wird beispielsweise in der US 2003/0001726 A1 beschrieben. Diese hat jedoch den Nachteil, dass eine Vielzahl von Antennenleitungen zwischen Schreib/Lese-Station und den einzelnen Antennen parallel gelegt werden müssen, und dass das Gesamtsystem nicht modular aufgebaut ist, womit eine flexible Anpassung an unterschiedliche Anforderungen nicht gewährleistet ist.

Solche und artverwandte Geräte sind jeweils irgendwo zwischen Schreib/Lese-Station und Antenne angeordnet und müssen in geeigneter Weise von der Schreib/Lese-Station gesteuert werden. Gemäß dem Stand der Technik werden bisher Steuerleitungen, die als zusätzliche Verbindungen zwischen Schreib/Lese-Station und externer Funktionseinheit ausgeführt sind, benötigt, was den Nachteil hat, dass ein zusätzlicher Hardwareaufwand notwendig ist und bei der Installation eines solchen RFID-Systems zusätzlicher Installationsaufwand entsteht, wodurch zusätzliche Fehlerquellen entstehen können.

Weiterhin wird gemäß dem Stand der Technik versucht, externe Funktionseinheiten mittels einfacher Pulse, die das Trägersignal für eine definierte Zeitspanne unterbrechen, oder mittels Gleichspannungen, die dem Trägersignal überlagert werden, zu steuern. Der Nachteil bei der Steuerung mittels einfacher Pulse oder Gleichspannung besteht jedoch darin, dass bei der Schreib/Lese-Station zusätzlicher Hardwareaufwand notwendig ist und die Steuerung meist nur in eine Richtung, nämlich von der Schreib/Lese-Station zur externen Funktionseinheit funktioniert. Zudem können bei diesen Verfahren keine komplexen Daten oder Befehle gesendet werden, was beispielsweise im Falle eines Multiplexers den Nachteil hat, dass nur ein sequentielles, aber kein gezieltes Weiterschalten der Multiplexerausgänge möglich ist. Ferner besteht bei beiden genannten Verfahren die Gefahr, dass durch das Aussenden der Pulse das abgestrahlte Frequenzspektrum des RFID-Systems so verändert wird, dass die durch Funkvorschriften reglementierten Grenzwerte überschritten werden.

Das der Erfindung zugrunde liegende technische Problem besteht darin, ein Verfahren zur Datenübertragung zwischen einer Schreib/Lese-Station eines RFID-Systems und wenigstens einer externen Funktionseinheit anzugeben, das die genannten Nachteile nicht aufweist. Darüber hinaus soll eine Schreib/Lese-Station zur Durchführung des Verfahrens sowie eine Funktionseinheit angegeben werden.

Dieses technische Problem wird durch ein Verfahren mit den Merkmalen gemäß Anspruch 1, durch eine Schreib/Lese-Station mit den Merkmalen gemäß Anspruch 20 sowie durch eine Funktionseinheit mit den Merkmalen gemäß Anspruch 28 gelöst.

Dadurch, dass bei dem erfindungsgemäßen Verfahren zur Datenübertragung zwischen einer Schreib/Lese-Station eines RFID-Systems und wenigstens einer externen Funktionseinheit wenigstens ein Datenblock von der Schreib/Lese-Station zu der externen Funktionseinheit gesendet wird, und dadurch, dass der gesendete Datenblock von mindestens einer der externen Funktionseinheiten empfangen wird, und dass nach dem Empfangen des gesendeten Datenblockes mindestens eine externe Funktionseinheit den wenigstens einen Datenblock auswertet, sowie dadurch, dass die Übertragung wenigstens eines Datenblockes ausschließlich über eine RFID-Kommunikationsverbindung von der Schreib/Lese-Station an die wenigstens eine Funktionseinheit und/oder zurück erfolgt, wird die ohnehin vorhandene RFID-Kommunikationsverbindung verwendet, so dass kein zusätzlicher Hardwareaufwand an der Schreib/Lese-Station und keine zusätzliche Verbindung zwischen Schreib/Lese-Station und Funktionseinheit notwendig ist.

Gemäß einem besonders bevorzugten Ausführungsbeispiel des erfindungsgemäßen Verfahrens ist vorgesehen, dass an der Schreib/Lese-Station maximal eine modifizierte Firmware eingesetzt wird, um mit den "neuen" externen Funktionseinheiten kommunizieren zu können, da alle anderen Komponenten bereits in der Schreib/Lese-Station vorhanden sind.

Für die Kommunikation zwischen der Schreib/Lese-Station und der wenigstens einen externen Funktionseinheit wird derselbe physikalische und datentechnische Übertragungskanal genutzt, über den die Daten gemäß dem Stand der Technik zwischen Transponder und Schreib/Lese-Station bidirektional ausgetauscht wurden. Das heißt, dass die externen Funktionseinheiten die Befehle in derselben Form erhalten, wie diese an einen Transponder gesendet werden. Es wird dieselbe Leitung und vorteilhafter Weise dieselbe Codierung, dieselbe Art der Modulation und so weiter verwendet.

Die RFID-Kommunikationsverbindung ist vorteilhaft als Verbindung mit einem Kabel ausgebildet. Es ist jedoch auch möglich, eine kabellose Verbindung vorzusehen.

Für die externen Funktionseinheiten werden lediglich beispielhaft folgende Einheiten genannt: Multiplexer, Tuner, Powersplitter, Transformer, Signaleinheit, Sensor.

Die Schreib/Lese-Station sendet Datenblöcke über die RFID-Kommunikationsverbindung, und wenigstens eine externe Funktionseinheit empfängt diese Datenblöcke. Die externe Funktionseinheit wertet die Daten der Schreib/Lese-Station aus. Führt die Auswertung in der externen Funktionseinheit dazu, dass die Daten Aktionen in der empfangenden externen Funktionseinheit auslösen, kann die externe Funktionseinheit unter Nutzung der RFID-Kommunikationsverbindung Antwortdaten zu der Schreib/Lese-Station zurücksenden. Diese Antwortdaten können mittels der Empfangsschaltung für Transponderdaten der Schreib/Lese-Station empfangen werden.

Ein Vorteil des erfindungsgemäßen Verfahrens ist, dass die Hardware der Schreib/Lese-Station direkt genutzt werden kann, um externe Funktionseinheiten anzusteuern oder diesen Daten zu senden, ohne dass Zusatzhardware in der Schreib/Lese-Station vorgesehen werden muss.

Darüber hinaus können komplexe Informationen übertragen werden. Weiterhin ist die Absicherung der Informationen durch Kommunikationsrahmen, Plausibilitätschecks und Checksummen möglich. Ein weiterer Vorteil der Erfindung ist, dass eine genaue Steuerung und Adressierung einer Vielzahl von Funktionseinheiten möglich ist.

Ein weiterer wichtiger Vorteil der Erfindung ist, dass die Übertragung analoger Größen digital codiert erfolgt. Darüber hinaus ist eine Übertragung in beiden Richtungen, das heißt von der Schreib/Lese-Station zu der externen Funktionseinheit und/oder zurück möglich.

Darüber hinaus gewährleistet die Erfindung, dass das vom RFID-System abgestrahlte Frequenzspektrum gegenüber einem zum Stand der Technik gehörenden RFID-System, welches nicht die Möglichkeit zur Steuerung externer Funktionseinheiten aufweist, praktisch unbeeinflusst bleibt, da die Erfindung dieselben Verfahren und Vorrichtungen, wie Modulations- und Codiervorrichtungen, wie die zum Stand der Technik gehörenden RFID-Systeme nutzt. Das abgestrahlte Frequenzspektrum ist von der Art der Modulation (Amplituden-, Frequenz- oder Phasenmodulation), von der Modulationstiefe und der Art der Daten-Codierung abhängig. Es weist neben dem vom Taktsignalgenerator erzeugten Trägersignal so genannte Seitenbänder auf. Weiterhin können hierdurch verschiedene Oberwellen im Datenübertragungssystem entstehen, die dann ebenso Bestandteil des abgestrahlten Frequenzspektrums sind. Die Codierung wird unter anderem durch die Breite der modulierten Pulse und die Anzahl und Häufigkeit der Pulse beschrieben. Die Grenzwerte für die Höhe des Trägersignales, der Seitenbänder und der Oberwellen im abgestrahlten Frequenzspektrum sind durch Funkvorschriften reglementiert.

Die besonderen Vorteile der Erfindung werden anhand der Ansteuerung eines Multiplexers im Folgenden näher erläutert.

Die Schreib/Lese-Station sendet über die RFID-Kommunikationsverbindung Datenblöcke an die externe Funktionseinheit, die im vorliegenden Beispiel als Multiplexer ausgebildet ist. Der Multiplexer weist ein Empfangsteil auf, welches in Teilen der Funktion des Empfangsteiles eines Transponders entspricht. Das Signal der Schreib/Lese-Station ist dabei so ausgebildet, dass es von dem Empfänger des Multiplexers oder einem Transponder verarbeitet werden kann.

Die Anwendung des erfindungsgemäßen Verfahrens bei Multiplexern hat den Vorteil, dass die Reihenfolge der Ansteuerung der Antennen beliebig wählbar ist. Bei den zum Stand der Technik gehörenden Multiplexern, die über eine normale Steuerleitung von der Schreib/Lese-Station angesteuert werden, können die Antennen immer nur der Reihe nach durchgeschaltet werden. Gemäß der Erfindung ist die Reihenfolge der Ansteuerung der Antennen beliebig wählbar.

Darüber hinaus ist mit dem erfindungsgemäßen Verfahren auch einstellbar, dass die Weiterschaltung auf die nächste Antenne nur erfolgt, wenn sie auch tatsächlich gewollt ist. Dies ist beispielsweise bei einem Stromausfall vorteilhaft. Bei einem Stromausfall erhält der Multiplexer gemäß dem Stand der Technik einen Impuls beim Wiedereinschalten des Stromes und schaltet auf die nächste Antenne weiter. Dies hat den Nachteil, dass zum einen eine Antenne angesteuert wird, die nicht an der Reihe ist, und zum anderen kann nicht überprüft werden, welche Antenne angesteuert wird.

Gemäß der Erfindung ist es möglich, dass der Multiplexer auf die Antenne schaltet, die beispielsweise als letztes vor dem Stromausfall angesteuert war. Es ist auch möglich, dass der Multiplexer auf einen "Nullpunkt" schaltet, beispielsweise auf die erste Antenne. Es ist auch möglich, über die Rückübertragung der Daten an die Schreib/Lese-Station abzulesen, welche Antenne gerade angesprochen wird.

Auch bei der Durchführung eines Antennenabgleiches ist es erforderlich, eine Rückmeldung über die Funktionseinheit auf die Schreib/Lese-Station zu erhalten.

Von der Schreib/Lese-Station wird ein Datenprotokoll an die wenigstens eine Funktionseinheit gesendet. Es handelt sich hierbei um ein komplettes Datenprotokoll. Dies hat den Vorteil, dass ein Transponder, der das Datenprotokoll ebenfalls erhält, ein Datenprotokoll erhält, welches dem üblichen Datenprotokoll entspricht. Der Transponder prüft also das Datenprotokoll und stellt nach der Prüfung fest, ob er angesprochen wurde oder nicht.

Die Wahl von transponderkompatiblen Datenblöcken ist vorteilhaft, da der Transponder das Protokoll vollständig durchprüft und aufgrund der Prüfung eine Aktion vornimmt oder nicht. Würde der Transponder dagegen Datenblöcke erhalten, die für ihn nicht oder nur teilweise lesbar sind, würde er eventuell mit dem Empfang beziehungsweise mit der Prüfung der Datenblöcke beginnen und dann feststellen, dass die Daten nicht für ihn bestimmt oder fehlerhaft sind. Der Zeitpunkt, zu dem der Transponder dieses feststellt, kann aber deutlich nach dem Ende des Datenblockes liegen, was den Transponder für die Zeit nach dem Ende des empfangenden Datenblockes bis zur Erkennung des Datenblockfehlers für die weitere Kommunikation blockiert. In einigen anderen Fällen, beispielsweise bei bestimmten Transponder-Typen, muss der Transponder nach dem Empfang eines falschen Datenblockes erst komplett zurückgesetzt werden, bevor er neue Datenblöcke empfangen kann.

Ein weiteres Ziel der Erfindung ist es, den oder die Transponder im Erfassungsbereich der Schreib/Lese-Station durch gesendete Signale nicht zu stören oder den Zustand der Transponder nicht zu beeinflussen. Bei der Kommunikation mehrerer Transponder mit einer Lesestation nehmen die Transponder zum Beispiel verschiedene Zustände an. Transponder, die neu in den Erfassungsbereich einer Schreib/Lese-Station kommen, sind zum Beispiel in einem so genannten READY STATE. In diesem Zustand sind die Transponder zum Beispiel bereit, um Befehle für einen so genannten Antikollisionsvorgang zu durchlaufen. In dem Antikollisionsvorgang können die Datenkollisionen zwischen mehreren Transpondern im Erfassungsbereich der Schreib/Lese-Station aufgelöst werden und die Seriennummern der Transponder festgestellt werden. Transponder, deren Seriennummer festgestellt wurde, wechseln dann beispielsweise in einen Zustand, in dem sie nicht mehr an dem Antikollisionsvorgang teilnehmen. Wird zum Beispiel dieser Zustand, in dem der Transponder nicht mehr an dem Antikollisionsvorgang teilnimmt, durch falsche Datenblöcke verlassen, so nehmen die identifizierten Transponder wieder an dem Antikollisionsvorgang teil, was zu einem deutlich längeren Antikollisionsvorgang führt.

Ein anderes Beispiel für einen Transponderzustand tritt bei Transpondern mit Sicherheitsfunktionen auf. Bei diesen Transpondern wird meist vor dem eigentlichen Datenaustausch eine Authentifikation durchgeführt. Empfängt ein authentifizierter Transponder falsche Datenblöcke, kann er zum Beispiel den Zustand des Datenaustausches verlassen, da der Transponder den falschen Datenblock als Manipulationsversuch auffasst. Falsche Datenblöcke können Datenblöcke zum Beispiel mit falschen Checksummen, fehlenden Ende-Zeichen, falschen Protokolllängen, Teildatenblöcke oder auch nur einzelne Bits beziehungsweise Modulationspulse sein. Bei den Modulationspulsen spielt sehr oft die Pulsbreite eine entscheidende Rolle. So werden von manchen Transpondern Pulse, die eine größere Pulsbreite als die eigentlichen Datenpulse aufweisen, als Reset-Befehl interpretiert.

Eine besondere Variante der Vermeidung von Störungen der Transponder ist die Nutzung einer so genannten Manufacturer ID zur Adressierung der externen Funktionseinheiten. In einigen Transpondersystemen kommen Transponder zum Einsatz, die bei bestimmten Befehlen einen Manufacturer ID verwenden, um festzustellen, ob ein Befehl für diesen Transponder bestimmt ist. Bei einer vorteilhaften Ausführung der hier beschriebenen Erfindung werden die externen Funktionseinheiten durch einen bestimmten Manufacturer ID adressiert, um so Störungen der Transponder zu vermeiden.

Gemäß einer weiteren vorteilhaften Ausgestaltung der Erfindung ist die Schreib/Lese-Station so ausgeführt, dass sie Datenblöcke vom Host an die Funktionseinheit oder von der Funktionseinheit an den Host weiterleiten kann. Diese Funktion kann in verschiedenen Ausführungsformen realisiert werden. Eine Möglichkeit ist eine so genannte transparente Kommunikation. Hierbei werden die vom Host gesendeten Daten direkt über die RFID-Kommunikationsverbindung an die Funktionseinheiten oder die Transponder gesendet. Das bedeutet, die von dem Host gesendeten Datenblöcke werden weitgehend schon als Bit-Strom derart in die Schreib/Lese-Station eingespeist, dass die Schreib/Lese-Station die über das Host-Protokoll gesendeten Bits lediglich in die Bitcodierung der RFID-Kommunikationsverbindung umcodieren muss und dann über die RFID-Kommunikationsverbindung versenden kann. Speziell codierte Teile des RFID-Kommunikationsprotokolles, wie zum Beispiel Start of Frame, werden dabei von der Schreib/Lese-Station in den Datenblock eingefügt, der über die RFID-Kommunikationsverbindung an die Funktionseinheiten oder Transponder versendet wird. Bei der transparenten Kommunikation kann die Schreib/Lese-Station ebenso Datenblöcke einer Funktionseinheit empfangen und den empfangenen Bit-Strom weitgehend unverändert an den Host weiterleiten. Das heißt, auch beim Weiterleiten von empfangenen Datenblöcken von Funktionseinheiten werden nur RFID-kommunikationsspezifische Teile des Datenblockes, wie zum Beispiel Start of Frame, entfernt, jedoch wesentliche Teile der Information des Datenblockes der Funktionseinheit als Bit-Strom von der Schreib/Lese-Station an die Funktionseinheit weitergeleitet. Um die transparente Kommunikation ohne Änderungen an der Schreib/Lese-Station nutzen zu können, ist es wichtig, dass die Funktionseinheiten gleiches Antwortverhalten wie die Transponder besitzen. Das heißt, eine Ausführung der Funktionseinheit, die eine transparente Kommunikation ohne Änderung der Reader Firmware ermöglicht, reagiert auf einen für die Funktionseinheit bestimmten und von der Schreib/Lese-Station gesendeten Datenblock mit gleichem Zeitverhalten wie ein Transponder des entsprechenden RFID-Systems. Gleiches Zeitverhalten bedeutet, dass nicht nur die Daten zeitlich gleich codiert sind, sondern auch die Antwortdaten zu einem gleichen Zeitpunkt oder im Zeitraster wie die Transponder-Antwort erfolgen.

Eine andere Möglichkeit der Weiterleitung oder Durchleitung von Daten des Host an die Funktionseinheit beziehungsweise von Daten der Funktionseinheit an den Host ist die Integration von Steuerbefehlen im Host-Protokoll der Schreib/Lese-Station zur Steuerung und Überwachung der Funktionseinheiten. Bei dieser Form der Implementierung werden vom Host gesendete Informationen in die entsprechenden Datenblöcke für die Funktionseinheit umgesetzt beziehungsweise die Antwortdatenblöcke der Funktionseinheiten in Informationen für den Host umgesetzt.

Beispiele für Anwendungen der oben beschriebenen Kommunikations- und Weiterleitungsverfahren von Daten zwischen Host und Funktionseinheit sind unter anderem die Steuerung eines Multiplexers durch den Host, so dass der Host jederzeit bestimmen kann, welche Antenne des RFID-Systems aktiviert ist, oder der Host kann durch Abfrage der gerade aktiven Ausgänge des Multiplexers ermitteln und damit feststellen, von welcher Antenne aktuell Transponder gelesen werden. Ein anderes Anwendungsbeispiel ist die Steuerung von Signalgebern, wie LED's oder Summer, die mit einer Funktionseinheit in der Antenne verbunden sind.

Es ist jedoch auch möglich, die Funktionseinheit direkt durch die Schreib/Lese-Station zu steuern. Dies bedeutet, dass eine Schreib/Lese-Station eine eigene Steuerungsvorrichtung besitzt, die vorteilhaft in der Datenverarbeitungseinrichtung integriert ist, mit der die Schreib/Lese-Station die Funktionseinheiten steuern und überwachen kann. Beispiele für solche von der Schreib/Lese-Station gesteuerten Vorgänge sind die Steuerung des Antennenabgleiches einer Antenne des RFID-Systems dadurch, dass die Schreib/Lese-Station nach Feststellung einer Fehlanpassung der Antenne einen Datenblock über die RFID-Kommunikationsverbindung an die Funktionseinheit "Antennenabgleich" sendet, der in der Funktionseinheit "Antennenabgleich" dazu führt, dass der Abgleich der Antenne verändert wird. Dieser Vorgang kann so lange wiederholt werden, bis der Fehlabgleich der Antenne aufgehoben ist.

Das erfindungsgemäße Verfahren ist auch bei Multifrequenzreadern einsetzbar.

Weitere Merkmale und Vorteile der Erfindung ergeben sich anhand der zugehörigen Zeichnung, in der ein Ausführungsbeispiel eines erfindungsgemäßen Datenübertragungssystems nur beispielhaft dargestellt ist. In der Zeichnung zeigen:
- Fig. 1: ein Blockschaltbild eines Kommunikationssystems;
- Fig. 2: ein Blockschaltbild einer externen Funktionseinheit;
- Fig. 3: das Kommunikationsmittel (KM) der Funktionseinheit der Fig. 2;
- Fig. 4: ein Blockschaltbild der wesentlichen Teile einer Schreib/Lese-Station;
- Fig. 5: ein Beispiel für ein Protokoll eines Datenblockes.

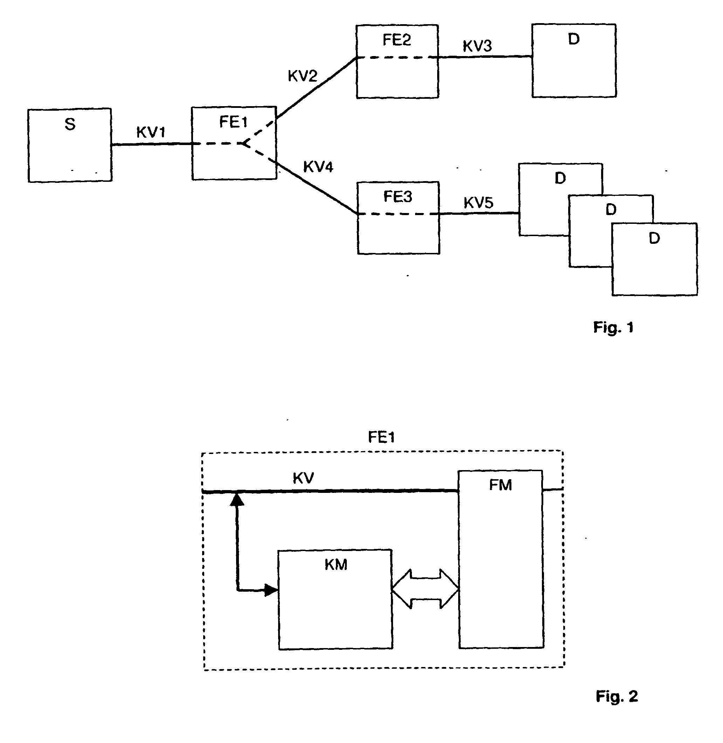

Fig. 1 zeigt ein Blockschaltbild eines Kommunikationssystems bestehend aus einer Schreib/Lese-Station (S), externen Funktionseinheiten (FE1, FE2, FE3) und Transpondern, die als Datenträger (D) bezeichnet sind.

Die Schreib/Lese-Station (S) ist zur Kommunikation mit einer Vielzahl von Datenträgern (D) und mehreren externen Funktionseinheiten (FE1, FE2, FE3) vorgesehen und ausgebildet, wobei Kommunikationsverbindungen (KV1, KV2, KV4) als Kabelverbindung mit Koaxialkabel ausgebildet sind. Die Kommunikationsverbindungen (KV3, KV5) sind als kontaktlose Datenübertragungsverbindungen ausgebildet.

Die Kommunikation erfolgt hauptsächlich in Form von Datenblöcken, wobei jeder Datenblock aus einer vorgegebenen Anzahl von Bytes besteht, von denen jedes Byte aus einer vorgegebenen Anzahl von Bits besteht.

Die Schreib/Lese-Station (S) sendet über die Kommunikationsverbindungen (KV1, KV2, KV3) Datenblöcke an die externen Funktionseinheiten (FE1, FE2, FE3) oder an die Datenträger (D). Die Datenblöcke werden in den entsprechenden externen Funktionseinheiten (FE1, FE2, FE3) oder Datenträgern (D) bearbeitet. Die entsprechenden externen Funktionseinheiten (FE1, FE2, FE3) oder Datenträger (D) senden über die Kommunikationsverbindungen (KV1, KV2, KV3, KV4, KV5) Datenblöcke an die Schreib/Lese-Station zurück.

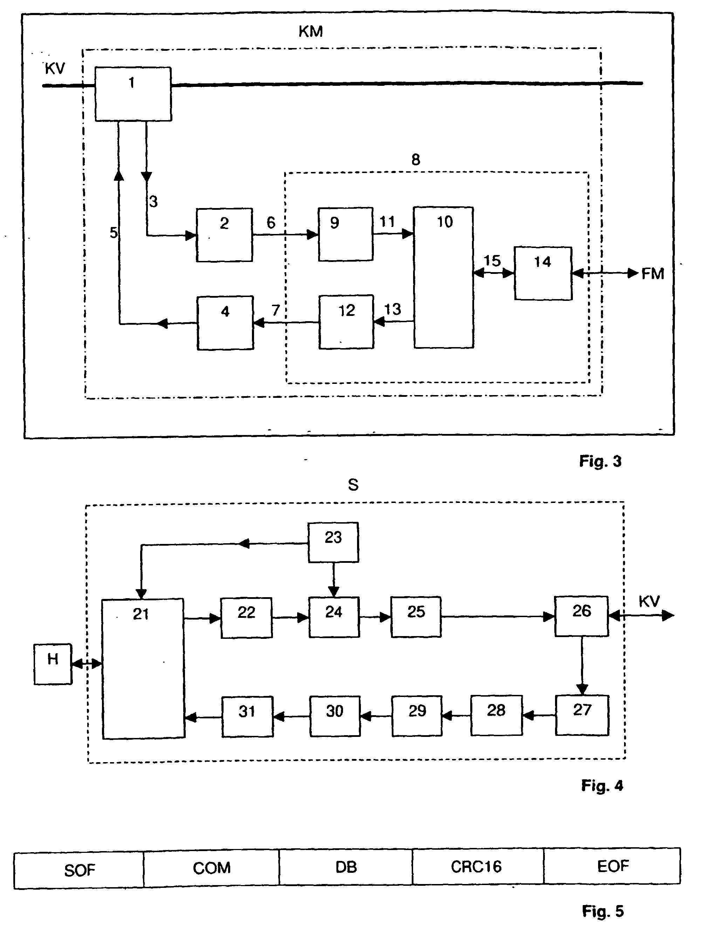

In Fig. 2 ist die externe Funktionseinheit (FE1) dargestellt. Sie besteht aus den Kommunikationsmitteln (KM), die in Fig. 3 noch genauer beschrieben werden, und den Funktionsmitteln (FM), die beispielsweise als Multiplexer, Antennenabgleich, Powersplitter, Transformer, Signaleinheit oder Sensor ausgebildet sind.

Fig. 3 zeigt das Kommunikationsmittel (KM), welches zum Kommunizieren mit den RFID-Schreib/Lese-Stationen ausgebildet ist. Das Kommunikationsmittel (KM) enthält eine Empfangs-/Sende-Vorrichtung (1), welche sowohl zum Empfangen als auch zum Senden von Datenblöcken ausgebildet ist, wobei das Signal aus der Kommunikationsverbindung (KV) zum und vom Datenträger nicht oder nur unwesentlich verändert wird.

Das Kommunikationsmittel (KM) enthält eine Demodulationsvorrichtung (2), beispielsweise eine Amplitudendemodulationsvorrichtung, die über eine Verbindung (3) mit der Empfangs-/Sende-Vorrichtung (1) verbunden ist. Mit der Demodulationsvorrichtung (2) kann das von der Schreib/Lese-Station gesendete und mit der Empfangs-/Sende-Vorrichtung (1) empfangene amplitudenmodulierte Trägersignal demoduliert werden.

Das Kommunikationsmittel (KM) enthält darüber hinaus eine Belastungsmodulationsvorrichtung (4), mit der eine Belastungsmodulation des unmodulierten Trägersignales durchgeführt werden kann. Die Belastungsmodulationsvorrichtung (4) ist über eine Verbindung (5) mit der Empfangs-/Sende-Vorrichtung (1) verbunden.

Das Kommunikationsmittel (KM) enthält darüber hinaus eine integrierte Schaltung (8), die über eine Verbindung (6) mit der Demodulationsvorrichtung (2) und über eine Verbindung (7) mit der Belastungsmodulationsvorrichtung (4) verbunden ist. Die integrierte Schaltung (8) enthält eine Decodiervorrichtung (9), die für das Decodieren von Datenblöcken vorgesehen ist, und eine Codiervorrichtung (12), die für das Codieren von Datenblöcken vorgesehen ist. Die Datenblöcke werden mit einer Datenverarbeitungsvorrichtung (10), die über eine Verbindung (11) mit der Decodiervorrichtung (9) und über eine Verbindung (13) mit der Codiervorrichtung (12) verbunden ist, ausgewertet. Über eine Verbindung (15) kann die Datenverarbeitungsvorrichtung (10) die Ein- und Ausgänge (14) der integrierten Schaltung (8) einlesen und einstellen.

Fig. 4 zeigt das Blockschaltbild, der wesentlichen Teile der Schreib/Lese-Station (S), die zur Kommunikation mit Datenträgern (D) und externen Funktionseinheiten (FE1, FE2, FE3) ausgebildet ist.

Die Kommunikation zwischen der Schreib/Lese-Station (S) und den externen Funktionseinheiten (FE1, FE2, FE3) oder zwischen der Schreib/Lese-Station (S) und den Datenträgern (D) erfolgt hauptsächlich in Form von Datenblöcken, wobei jeder Datenblock aus einer vorgegebenen Anzahl von Bytes oder Bits besteht.

Die Schreib/Lese-Station (S) weist eine Datenverarbeitungsvorrichtung (21) auf. In der Datenverarbeitungsvorrichtung (21) sind nicht dargestellte Ablaufsteuervorrichtungen, Logikvorrichtungen, Steuervorrichtungen und Speichervorrichtungen enthalten.

Die Schreib/Lese-Station (S) enthält weiterhin einen Taktsignalgenerator (23), der ein Taktsignal und ein Trägersignal mit der entsprechenden Trägerfrequenz erzeugt. Das Taktsignal wird der Datenverarbeitungsvorrichtung (21) zugeführt.

Das erzeugte Trägersignal wird einer Modulationsvorrichtung (24) zugeführt.

Die Schreib/Lese-Station (S) weist darüber hinaus eine Codiervorrichtung (22) auf, der mit der Datenverarbeitungsvorrichtung (21) erzeugte Datenblöcke zugeführt werden. Die Steuerung der Codiervorrichtung (22) kann auch über die Datenverarbeitungsvorrichtung (21) erfolgen. Die Codiervorrichtung (22) sorgt für ein Codieren der zugeführten Datenblöcke. Die codierten Datenblöcke werden der Modulationsvorrichtung (24) zugeführt. Für den Fall, dass keine codierten Datenblöcke von der Codiervorrichtung (22) zugeführt werden, gibt die Modulationsvorrichtung (24) das unmodulierte Trägersignal ab.

Das modulierte und das unmodulierte Trägersignal werden einem Sendeverstärker (25) zugeführt. Das vom Sendeverstärker (25) verstärkte Signal gelangt über eine Kopplungsvorrichtung (26) an die Kommunikationsverbindung (KV).

Über die Kopplungsvorrichtung (26) kann das Signal auf der Kommunikationsverbindung (KV), das entweder unmoduliert oder von der Schreib/Lese-Station, vom Datenträger oder von der externen Funktionseinheit moduliert ist, ausgekoppelt werden.

Im Weiteren soll nun die Verarbeitung von Signalen betrachtet werden, die von externen Funktionseinheiten oder Transpondern moduliert sind.

Die Schreib/Lese-Station (S) weist zusätzlich eine Eingangsfiltervorrichtung (27) auf, die mit der Kopplungsvorrichtung (26) verbunden ist. Nach der Filterung des modulierten Trägersignales kann das gefilterte Signal an eine Demodulationsvorrichtung (28) geführt werden. Nach der ersten Demodulation handelt es sich zum Beispiel um ein Hilfsträgersignal, das gemäß einem "Manchester Code", einem "Miller Code", einem "Differential Biphase Code" oder gemäß anderen Codiermethoden codiert ist.

Die Schreib/Lese-Station (S) enthält eine Zwischenfrequenzverstärkungsvorrichtung (29), die das Hilfsträgersignal verstärkt und in verstärkter Form auf eine weitere Demodulationsvorrichtung (30) führt. Über die Demodulationsvorrichtung (30) wird das Datensignal, das gemäß einem "Manchester Code", einem "Miller Code", einem "Differential Biphase Code" oder gemäß anderen Codiermethoden codiert ist, ohne Hilfsdatenträger erzeugt.

Das codierte Datensignal ohne Hilfsdatenträger kann auf eine Decodiervorrichtung (31) geführt werden. Die von der Decodiervorrichtung (31) decodierten Datenblöcke können an die Datenverarbeitungsvorrichtung (21) gelängen.

Es ist darüber hinaus möglich, über die Datenverarbeitungsvorrichtung (21) über eine Schnittstelle, die hier nicht dargestellt ist, mit einem Host (H) zu kommunizieren. Dabei können Datenblöcke zur Kommunikation mit der Schreib/Lese-Station (S), Datenblöcke zur Steuerung der Transponder und Datenblöcke zur Kommunikation mit externen Funktioriseinheiten vom Host (H) zur Schreib/Lese-Station gesendet werden. Datenblöcke, die von Transpondern oder externen Funktionseinheiten an die Schreib/Lese-Station gesendet werden, können von der Schreib/Lese-Station (S) an den Host (H) gelangen.

Bei der bisherigen Beschreibung des Systems ist davon ausgegangen worden, dass die Antwortdatenblöcke der externen Funktionseinheiten und der Transponder mit einem Hilfsträger moduliert sind. Die Erfindung ist jedoch nicht auf die Verwendung eines Hilfsträgers beschränkt. Bei der Modulation der Datenblöcke ohne Verwendung eines Hilfsträgers können die Demodulationsvorrichtung (28) und die Zwischenfrequenzverstärkungsvorrichtung (29) der Schreib/Lese-Station entfallen.

Fig. 5 zeigt ein Beispiel für ein Protokoll zur Realisierung der Kommunikation zwischen der Schreib/Lese-Station (S) und einer externen Funktionseinheit (FE1).

Das Protokoll besteht aus dem Protokollrahmen, der aus dem Start of Frame (SOF), aus den Kommandobytes (COM), aus einer Checksumme (CRC16) und aus dem End of Frame (EOF) aufgebaut ist. Zusätzlich ist ein Datenblock (DB) vorhanden. Das Protokoll zur Kommunikation zwischen der Schreib/Lese-Station (S) und der externen Funktionseinheit (FE) ist so aufgebaut, dass es einen Datenträger nicht stört oder beeinflusst.

Wird von einer Schreib/Lese-Station (S) ein Protokoll gesendet, welches für eine externe Funktionseinheit (FE) bestimmt ist, wird dieses über die Kommunikationsverbindung (KV) gemäß Fig. 3 gesendet und von den Kommunikationsmitteln (KM) mit der Empfangs-/Sende-Vorrichtung (1) empfangen, mit der Demodulationsvorrichtung (2) demoduliert, mit der Decodiervorrichtung (9) decodiert und mit der Datenverarbeitungsvorrichtung (10) verarbeitet.

Über die Codiervorrichtung (12) und die Belastungsmodulationsvorrichtung (4) kann über die Empfangs-/Sende-Vorrichtung (1) ein Protokoll über die Kommunikationsverbindung (KV) zurück an die Schreib/Lese-Station gesendet werden.

Das zurückgesendete Protokoll kann dabei den gleichen Aufbau wie das in Fig. 5 beschriebene Protokoll aufweisen.

### Bezugszahlen

- 1: Empfangs/Sende-Vorrichtung
- 2: Demodulationsvorrichtung
- 3: Verbindung
- 4: Belastungsmodulationsvorrichtung
- 5: Verbindung
- 6: Verbindung
- 7: Verbindung
- 8: integrierte Schaltung
- 9: Decodiervorrichtung
- 10: Datenverarbeitungsvorrichtung
- 11: Verbindung
- 12: Codiervorrichtung
- 13: Verbindung
- 14: Ein- und Ausgänge
- 15: Verbindung
- 21: Datenverarbeitungsvorrichtung
- 22: Codiervorrichtung
- 23: Taktsignalgenerator
- 24: Modulationsvorrichtung
- 25: Sendeverstärker
- 26: Kopplungsvorrichtung
- 27: Eingangsfiltervorrichtung
- 28: Demodulationsvorrichtung
- 29: Zwischenfrequenzverstärkungsvorrichtung
- 30: Demodulationsvorrichtung
- 31: Decodiervorrichtung
- S: Schreib/Lese-Station
- FE1: externe Funktionseinheit
- FE2: externe Funktionseinheit
- FE3: externe Funktionseinheit
- D: Datenträger
- DB: Datenblock
- KV1: Kommunikationsverbindung
- KV2: Kommunikationsverbindung
- KV3: Kommunikationsverbindung
- KV4: Kommunikationsverbindung
- KV5: Kommunikationsverbindung
- KM: Kommunikationsmittel
- FM: Funktionsmittel
- H: Host
- SOF: Start of Frame
- EOF: End of Frame
- COM: Kommandobytes
- CRC16: Checksumme

## Patentansprüche

1. Verfahren zur Datenübertragung zwischen einer Schreib/Lese-Station (S) eines RFID-Systems und wenigstens einer externen Funktionseinheit (FE1, FE2, FE3), die an beliebiger Stelle in einer Kommunikationsverbindung zwichen der Schreib/Lese-Station (S) und einer Antenne angeordnet ist, bei dem wenigstens ein Datenblock von der Schreib/Lese-Station (S) zu der externen Funktionseinheit (FE1, FE2, FE3) gesendet wird, bei dem der gesendete Datenblock von mindestens einer der externen Funktionseinheiten (FE1, FE2, FE3) empfangen wird, und bei dem nach dem Empfangen des gesendeten Datenblockes mindestens eine externe Funktionseinheit (FE1, FE2, FE3) den wenigstens einen Datenblock auswertet,
**dadurch gekennzeichnet, dass** die Übertragung des wenigstens einen Datenblockes ausschließlich über wenigstens eine RFID-Kommunikationsverbindung von der Schreib/Lese-Station (S) an die wenigstens eine Funktionseinheit (FE1, FE2, FE3) und/oder zurück erfolgt.

2. Verfahren nach Anspruch 1, **dadurch gekennzeichnet, dass** der wenigstens eine an die Funktionseinheiten (FE1, FE2, FE3) zu sendende Datenblock einer Modulationsvorrichtung (24) der Schreib/Lese-Station (S) des RFID-Systems zur Modulation eines Trägersignales zugeführt wird, und dass der Datenblock an wenigstens eine externe Funktionseinheit (FE1, FE2, FE3) gesendet wird.

3. Verfahren nach einem der vorhergehenden Ansprüche, **dadurch gekennzeichnet, dass** der wenigstens eine an die Funktionseinheiten (FE1, FE2, FE3) zu sendende Datenblock einer Codiervorrichtung (22) der Schreib/Lese-Station (S) des RFID-Systems zur Codierung der Daten zugeführt wird, und dass der Datenblock an wenigstens eine externe Funktionseinheit (FE1, FE2, FE3) gesendet wird.

4. Verfahren nach Anspruch 2, **dadurch gekennzeichnet, dass** die Modulationsvorrichtung (24) der Schreib/Lese-Station (S) den an die wenigstens eine externe Funktionseinheit (FE1, FE2, FE3) zu sendenden Datenblock derart moduliert, dass der Datenblock bei einem bewussten oder unbewussten Empfangen von einem Datenträger (D) den Zustand des Datenträgers (D) nicht beeinflusst.

5. Verfahren nach Anspruch 3, **dadurch gekennzeichnet, dass** die Codiervorrichtung (22) der Schreib/Lese-Station (S) den an die wenigstens eine externe Funktionseinheit (FE1, FE2, FE3) zu sendenden Datenblock derart codiert, dass der Datenblock bei einem bewussten oder unbewussten Empfangen von einem Datenträger (D) den Zustand des Datenträgers (D) nicht beeinflusst.

6. Verfahren nach einem der vorhergehenden Ansprüche 2-5, **dadurch gekennzeichnet, dass** die über die Modulationsvorrichtung (24) der Schreib/Lese-Station (S) modulierten und/oder über die Codiervorrichtung (22) codierten Datenbits das von dem RFID-System abgestrahlte Frequenzspektrum nicht oder nicht über die vorgeschriebenen Grenzwerte hinaus verändert.

7. Verfahren nach einem der vorhergehenden Ansprüche, **dadurch gekennzeichnet, dass** die wenigstens eine Funktionseinheit (FE1, FE2, FE3) wenigstens einen Datenblock über eine Modulationsvorrichtung (4) an die Schreib/Lese-Station (S) überträgt.

8. Verfahren nach Anspruch 7, **dadurch gekennzeichnet, dass** die wenigstens eine Funktionseinheit (FE1, FE2, FE3) wenigstens einen Datenblock über die als Belastungsmodulationsvorrichtung ausgebildete Modulationsvorrichtung (4) an die Schreib/Lese-Station (S) überträgt.

9. Verfahren nach einem der vorhergehenden Ansprüche, **dadurch gekennzeichnet, dass** die wenigstens eine Funktionseinheit (FE1, FE2, FE3) wenigstens einen Datenblock über eine Codiervorrichtung (12) an die Schreib/Lese-Station (S) überträgt.

10. Verfahren nach Anspruch 9, **dadurch gekennzeichnet, dass** die wenigstens eine Funktionseinheit (FE1, FE2, FE3) wenigstens einen Datenblock mittels der Codiervorrichtung (12) derart codiert und an die Schreib/Lese-Station (S) überträgt, dass die Datenblöcke von der Schreib/Lese-Station (S) mittels ihrer Decodiervorrichtung (31), die zum Decodieren von Antwortdaten eines Datenträgers ausgebildet ist, decodierbar sind.

11. Verfahren nach einem der vorhergehenden Ansprüche, **dadurch gekennzeichnet, dass** die wenigstens eine Funktionseinheit (FE1, FE2, FE3) wenigstens einen Datenblock mit einem einem Transponder gleichen Antwortverhalten an die Schreib/Lese-Station (S) überträgt, und dass die Datenblöcke von der Schreib/Lese-Station (S) mittels ihrer Decodiervorrichtung (31), die zum Decodieren von Antwortdaten eines Datenträgers ausgebildet ist, auswertbar sind.

12. Verfahren nach einem der vorhergehenden Ansprüche, **dadurch gekennzeichnet, dass** der Datenblock und/oder der Antwortdatenblock einen Protokollrahmen aufweist.

13. Verfahren nach einem der vorhergehenden Ansprüche, **dadurch gekennzeichnet, dass** der Datenblock und/oder der Antwortdatenblock einen Start of Frame (SOF) und einen End of Frame (EOF) aufweist.

14. Verfahren nach einem der vorhergehenden Ansprüche, **dadurch gekennzeichnet, dass** der Datenblock und/oder der Antwortdatenblock wenigstens einen Prüfblock aufweist.

15. Verfahren nach einem der vorhergehenden Ansprüche, **dadurch gekennzeichnet, dass** der Datenblock aus einem Command Block, einem Parameterblock und Daten besteht.

16. Verfahren nach Anspruch 15, **dadurch gekennzeichnet, dass** der Parameterblock einen IC Manufacturer Code enthält.

17. Verfahren nach einem der vorhergehenden Ansprüche, **dadurch gekennzeichnet, dass** der Antwortdatenblock wenigstens einen Statusblock aufweist.

18. Verfahren nach einem der vorhergehenden Ansprüche, **dadurch gekennzeichnet, dass** die Datenblöcke vom Host (H) an die wenigstens eine Funktionseinheit (FE1, FE2, FE3) und/oder von der wenigstens einen Funktionseinheit (FE1, FE2, FE3) an den Host (H) unverändert oder weitgehend unverändert weitergeleitet werden.

19. Verfahren nach einem der vorhergehenden Ansprüche, **dadurch gekennzeichnet, dass** die Schreib/Lese-Station (S) Daten vom Host (H) an die wenigstens eine Funktionseinheit (FE1, FE2, FE3) und/oder Daten von der wenigstens einen Funktionseinheit (FE1, FE2, FE3) an den Host (H) weiter- oder durchleitet, wobei im Host-Protokoll Steuerbefehle für die Schreib/Lese-Station zur Steuerung und Überwachung der wenigstens einen Funktionseinheit (FE1, FE2, FE3) vorgesehen sind.

20. Schreib/Lese-Station zur Durchführung des Verfahrens nach Anspruch 1, **dadurch gekennzeichnet, dass** die Schreib/Lese-Station (S) eine Modulationsvorrichtung zur Modulation des Trägersignales für den an die wenigstens eine Funktionseinheit (FE1, FE2, FE3) zu sendenden Datenblock aufweist, die gleichzeitig zum Modulieren der Daten an einen Datenträger (D) verwendet wird, wobei die Funktionseinheit an beliebiger Stelle in einer Kommunikationsverbindung zwischen der Schreib/Lese-Station (S) und der Antenne angeordnet ist.

21. Schreib/Lese-Station nach Anspruch 20, **dadurch gekennzeichnet, dass** die Schreib/Lese-Station (S) eine Codiervorrichtung zur Codierung der Datenbits für den an die wenigstens eine Funktionseinheit (FE1, FE2, FE3) zu sendenden Datenblock aufweist, die-gleichzeitig zum Codieren der Daten an einen Datenträger (D) verwendet wird.

22. Schreib/Lese-Station nach Anspruch 20 oder 21, **dadurch gekennzeichnet, dass** die Schreib/Lese-Station (S) einen Demodulator und eine Decodiervorrichtung für einen Antwortdatenblock der wenigstens einen Funktionseinheit (FE1, FE2, FE3) aufweist, der gleichzeitig auch zum Demodulieren und Decodieren der Antwortdaten eines Datenträgers (D) verwendet wird.

23. Schreib/Lese-Station nach einem der Ansprüche 20 bis 22, **dadurch gekennzeichnet, dass** die Schreib/Lese-Station (S) eine Kommunikationsverbindung zu einem Computer (H) aufweist.

24. Schreib/Lese-Station nach einem der Ansprüche 20 bis 23, **dadurch gekennzeichnet, dass** die Schreib/Lese-Station (S) als eine Steuerbefehle an die wenigstens eine Funktionseinheit (FE1, FE2, FE3) von dem Computer (H) lediglich weiterleitende und/oder Datenblöcke von der wenigstens einen Funktionseinheit (FE1, FE2, FE3) an den Computer (H) lediglich weiterleitende Schreib/Lese-Station (S) ausgebildet ist.

25. Schreib/Lese-Station nach einem der Ansprüche 20 bis 23, **dadurch gekennzeichnet, dass** die Schreib/Lese-Station (S) als eine die wenigstens eine Funktionseinheit (FE1, FE2, FE3) steuernde Schreib/Lese-Station (S) ausgebildet ist.

26. Schreib/Lese-Station nach Anspruch 20, **dadurch gekennzeichnet, dass** die Schreib/Lese-Station (S) als eine von der wenigstens einen Funktionseinheit (FE1, FE2, FE3) gesendete Antwortdatenblöcke verarbeitende Schreib/Lese-Station (S) ausgebildet ist.

27. Schreib/Lese-Station nach einem der Ansprüche 20 bis 26, **dadurch gekennzeichnet, dass** die Schreib/Lese-Station (S) eine Steuerungsvorrichtung für die Steuerung und Überwachung der wenigstens einen Funktionseinheit (FE1, FE2, FE3) aufweist.

28. Funktionseinheit zum Kommunizieren mit einer Schreib/Lese-Station gemäß dem Verfahren nach Anspruch 1, die an beliebiger Stelle in einer Kommunikationsverbindung zwischen der Schreib/Lese-Station (S) und der Antenne angeordnet ist, bei der wenigstens ein Datenblock von der Schreib/Lese-Station empfangen wird, und bei der der wenigstens eine empfangene Datenblock ausgewertet wird, **dadurch gekennzeichnet, dass** die Funktionseinheit eine Empfangs- und/oder Sendevorrichtung aufweist, und dass die Übertragung des wenigstens einen Datenblockes als eine ausschließlich über eine RFID-Kommunikationsverbindung von der Schreib/Lese-Station (S) an die wenigstens eine Funktionseinheit (FE1, FE2, FE3) und/oder zurück erfolgende Übertragung ausgebildet ist.

29. Funktionseinheit nach Anspruch 28, **dadurch gekennzeichnet, dass** die Funktionseinheit (FE1, FE2, FE3) wenigstens eine Demodulationsvorrichtung (2) aufweist.

30. Funktionseinheit nach Anspruch 28 oder 29, **dadurch gekennzeichnet, dass** die Funktionseinheit (FE1, FE2, FE3) wenigstens eine Decodiervorrichtung (9) aufweist.

31. Funktionseinheit nach einem der Ansprüche 28 bis 30, **dadurch gekennzeichnet, dass** die Funktionseinheit (FE1, FE2, FE3) wenigstens eine Modulationsvorrichtung (4) aufweist.

32. Funktionseinheit nach Anspruch 31, **dadurch gekennzeichnet, dass** die Modulationsvorrichtung (4) der Funktionseinheit (FE1, FE2, FE3) als Belastungsmodulationsvorrichtung ausgebildet ist.

33. Funktionseinheit nach Anspruch 28, 29 oder 30, **dadurch gekennzeichnet, dass** die Funktionseinheit (FE1, FE2, FE3) wenigstens eine Codiervorrichtung (12) aufweist.

34. Funktionseinheit nach einem der Ansprüche 28 bis 33, **dadurch gekennzeichnet, dass** die Funktionseinheit (FE1, FE2, FE3) als eine von den Datenblöcken ausgelöste Aktionen durchführende Funktionseinheit (FE1, FE2, FE3) ausgebildet ist.

35. Funktionseinheit nach einem der Ansprüche 28 bis 34, **dadurch gekennzeichnet, dass** die Funktionseinheit (FE1, FE2, FE3) als zur Schreib/Lese-Station (S) Antwortdatenblöcke sendende Funktionseinheit (FE1, FE2, FE3) ausgebildet ist.

36. Funktionseinheit nach einem der Ansprüche 28 bis 35, **dadurch gekennzeichnet, dass** die Funktionseinheit (FE1, FE2, FE3) als eine Befehle an Datenträger (D) durchleitende Funktionseinheit (FE1, FE2, FE3) ausgebildet ist.

37. Funktionseinheit nach einem der Ansprüche 28 bis 36, **dadurch gekennzeichnet, dass** die Funktionseinheit (FE1, FE2, FE3) als eine einen Datenblock mit einem einem Transponder gleichen Antwortverhalten sendende Funktionseinheit (FE1, FE2, FE3) ausgebildet ist.

## Claims

1. Method for data transmission between a write/read station (S) of an RFID system and at least one external functional unit (FE1, FE2, FE3), which is arranged at any point in a communication connection between the write/read station (S) and an antenna, in which method at least one data block is sent from the write/read station (S) to the external functional unit (FE1, FE2, FE3), the sent data block is received by at least one of the external functional units (FE1, FE2, FE3), and after reception of the sent data block, at least one external functional unit (FE1, FE2, FE3) evaluates the at least one data block, **characterised in that** the transmission of the at least one data block takes place exclusively by way of at least one RFID communication connection from the write/read station (S) to the at least one functional unit (FE1, FE2, FE3) and/or back.

2. Method according to Claim 1, **characterised in that** the at least one data block to be sent to the functional units (FE1, FE2, FE3) is passed to a modulation device (24) of the write/read station (S) of the RFID system, for modulation of a carrier signal, and **in that** the data block is sent to at least one external functional unit (FE1, FE2, FE3).

3. Method according to one of the preceding claims, **characterised in that** the at least one data block to be sent to the functional units (FE1, FE2, FE3) is passed to a coding device (22) of the write/read station (S) of the RFID system, for coding of the data, and **in that** the data block is sent to at least one external functional unit (FE1, FE2, FE3).

4. Method according to Claim 2, **characterised in that** the modulation device (24) of the write/read station (S) modulates the data block to be sent to the at least one external functional unit (FE1, FE2, FE3) in a manner that in the case of intentional or unintentional reception by a data carrier (D), the state of the data carrier (D) is unaffected by the data block.

5. Method according to Claim 3, **characterised in that** the coding device (22) of the write/read station (S) codes the data block to be sent to the at least one external functional unit (FE1, FE2, FE3) in a manner that in the case of intentional or unintentional reception by a data carrier (D), the state of the data carrier (D) is unaffected by the data block.

6. Method according to one of the preceding Claims 2-5, **characterised in that** the frequency spectrum emitted by the RFID system is not changed or not changed beyond the prescribed limit values by the data bits modulated by way of the modulation device (24) of the write/read station (S) or coded by way of the coding device (22).

7. Method according to one of the preceding claims, **characterised in that** the at least one functional unit (FE1, FE2, FE3) transmits at least one data block to the write/read station (S) by way of a modulation device (4).

8. Method according to Claim 7, **characterised in that** the at least one functional unit (FE1, FE2, FE3) transmits at least one data block to the write/read station (S) by way of the modulation device (4) configured as a load modulation device.

9. Method according to one of the preceding claims, **characterised in that** the at least one functional unit (FE1, FE2, FE3) transmits at least one data block to the write/read station (S) by way of a coding device (12).

10. Method according to Claim 9, **characterised in that** the at least one functional unit (FE1, FE2, FE3) codes at least one data block by means of the coding device (12) and transmits it to the write/read station (S) in a manner that the data blocks can be decoded by the write/read station (S) by means of its decoding device (31) configured for decoding response data of a data carrier.

11. Method according to one of the preceding claims, **characterised in that** the at least one functional unit (FE1, FE2, FE3) transmits at least one data block having a response behaviour identical to a transponder to the write/read station (S), and **in that** the data blocks can be evaluated by the write/read station (S) by means of its decoding device (31) configured for decoding response data of a data carrier.

12. Method according to one of the preceding claims, **characterised in that** the data block and/or the response data block has a protocol frame.

13. Method according to one of the preceding claims, **characterised in that** the data block and/or the response data block has a start of frame (SOF) and an end of frame (EOF).

14. Method according to one of the preceding claims, **characterised in that** the data block and/or the response data block has at least one check block.

15. Method according to one of the preceding claims, **characterised in that** the data block comprises a command block, a parameter block, and data.

16. Method according to Claim 15, **characterised in that** the parameter block contains an IC manufacturer code.

17. Method according to one of the preceding claims, **characterised in that** the response data block has at least one status block.

18. Method according to one of the preceding claims, **characterised in that** the data blocks are relayed from the host (H) to the at least one functional unit (FE1, FE2, FE3) and/or from the at least one functional unit (FE1, FE2, FE3) to the host (H), unchanged or essentially unchanged.

19. Method according to one of the preceding claims, **characterised in that** the write/read station (S) relays or passes through data from the host (H) to the at least one functional unit (FE1, FE2, FE3) and/or data from the at least one functional unit (FE1, FE2, FE3) to the host (H), control commands for the write/read station being provided in the host protocol, for controlling and monitoring the at least one functional unit (FE1, FE2, FE3).

20. Write/read station for implementing the method according to Claim 1, **characterised in that** the write/read station (S) has a modulation device for modulation of the carrier signal for the data block to be sent to the at least one functional unit (FE1, FE2, FE3), said modulation device being simultaneously used to modulate the data to a data carrier (D), the functional unit being arranged at any point in a communication connection between the write/read station (S) and the antenna.

21. Write/read station according to Claim 20, **characterised in that** the write/read station (S) has a coding device for coding the data bits for the data block to be sent to the at least one functional unit (FE1, FE2, FE3), said coding device being simultaneously used to code the data to a data carrier (D).

22. Write/read station according to Claim 20 or 21, **characterised in that** the write/read station (S) has a demodulator and a decoding device for a response data block of the at least one functional unit (FE1, FE2, FE3), said demodulator and decoding device being simultaneously used to demodulate and decode the response data of a data carrier (D).

23. Write/read station according to one of Claims 20 to 22, **characterised in that** the write/read station (S) has a communication connection to a computer (H).

24. Write/read station according to one of Claims 20 to 23, **characterised in that** the write/read station (S) is configured as a write/read station (S) that merely relays control commands to the at least one functional unit (FE1, FE2, FE3) from the computer (H), and/or merely relays data blocks from the at least one functional unit (FE1, FE2, FE3) to the computer (H).

25. Write/read station according to one of Claims 20 to 23, **characterised in that** the write/read station (S) is configured as a write/read station (S) that controls the at least one functional unit (FE1, FE2, FE3).

26. Write/read station according to Claim 20, **characterised in that** the write/read station (S) is configured as a write/read station (S) that processes response data blocks sent by the at least one functional unit (FE1, FE2, FE3).

27. Write/read station according to one of Claims 20 to 26, **characterised in that** the write/read station (S) has a control device for controlling and monitoring the at least one functional unit (FE1, FE2, FE3).

28. Functional unit for communicating with a write/read station by the method according to Claim 1, which unit is arranged at any point in a communication connection between the write/read station (S) and the antenna, and in which at least one data block is received by the write/read station, and the at least one received data block is evaluated, **characterised in that** the functional unit has a receiving and/or sending device, and **in that** the transmission of the at least one data block is configured as a transmission that takes place exclusively by way of an RFID communication connection from the write/read station (S) to the at least one functional unit (FE1, FE2, FE3) and/or back.

29. Functional unit according to Claim 28, **characterised in that** the functional unit (FE1, FE2, FE3) has at least one demodulation device (2).

30. Functional unit according to Claim 28 or 29, **characterised in that** the functional unit (FE1, FE2, FE3) has at least one decoding device (9).

31. Functional unit according to one of Claims 28 to 30, **characterised in that** the functional unit (FE1, FE2, FE3) has at least one modulation device (4).

32. Functional unit according to Claim 31, **characterised in that** the modulation device (4) of the functional unit (FE1, FE2, FE3) is configured as a load modulation device.

33. Functional unit according to Claim 28, 29 or 30, **characterised in that** the functional unit (FE1, FE2, FE3) has at least one coding device (12).

34. Functional unit according to one of Claims 28 to 33, **characterised in that** the functional unit (FE1, FE2, FE3) is configured as a functional unit (FE1, FE2, FE3) that performs actions triggered by the data blocks.

35. Functional unit according to one of Claims 28 to 34, **characterised in that** the functional unit (FE1, FE2, FE3) is configured as a functional unit (FE1, FE2, FE3) that sends response data blocks to the write/read station (S).

36. Functional unit according to one of Claims 28 to 35, **characterised in that** the functional unit (FE1, FE2, FE3) is configured as a functional unit (FE1, FE2, FE3) that passes commands through to data carriers (D).

37. Functional unit according to one of Claims 28 to 36, **characterised in that** the functional unit (FE1, FE2, FE3) is configured as a functional unit (FE1, FE2, FE3) that sends a data block having a response behaviour identical to a transponder.

## Revendications

1. Procédé pour transmettre des données entre un poste d'écriture/lecture (S) d'un système RFID et au moins une entité fonctionnelle externe (FE1, FE2, FE3), disposée à un endroit voulu dans une liaison de communication entre le poste d'écriture /lecture (S) et une antenne, dans lequel on envoie l'au moins un bloc de données du poste d'écriture/lecture (S) vers l'entité fonctionnelle externe (FE1, FE2, FE3), dans lequel le bloc de données envoyé est reçu par au moins une des entités fonctionnelles externes (FE1, FE2, FE3), et dans lequel après la réception du bloc de données envoyé au moins une entité fonctionnelle externe (FE1, FE2, FE3) exploite l'au moins un bloc de données,
**caractérisé en ce que** la transmission de l'au moins un bloc de données a lieu exclusivement sur au moins une liaison de communication RFI d'un poste d'écriture/lecture (S) vers l'au moins une entité fonctionnelle (FE1, FE2, FE3) et/ou en retour.

2. Procédé selon la revendication 1, **caractérisé en ce que** l'au moins un bloc de données à envoyer vers les unités fonctionnelles (FE1, FE2, FE3) est transmis à un dispositif de modulation (24) du poste d'écriture/lecture (S) du système RFI pour la modulation d'un signal porteur, et que le bloc de données est envoyé vers au moins une entité externe fonctionnelle (FE1, FE2, FE3).

3. Procédé selon l'une quelconque des revendications précédentes, **caractérisé en ce que** l'au moins un bloc de données à envoyer vers les unités fonctionnelles (FE1, FE2, FE3) est transmis à un dispositif de codage (24) du poste d'écriture /lecture (S) du système RFI pour le codage des données, et que le bloc de données est envoyé vers au moins une entité fonctionnelle (FE1, FE2, FE3).

4. Procédé selon la revendication 2, **caractérisé en ce que** le dispositif de modulation (24) du poste d'écriture/lecture (S) module le bloc de données à envoyer vers l'au moins une entité fonctionnelle (FE1, FE2, FE3) de sorte que le bloc de données ne perturbe pas, pour une réception voulue ou non voulue d'un support de données (D), l'état du support de données (D).

5. Procédé selon la revendication 3, **caractérisé en ce que** le dispositif de codage (22) du poste d'écriture/lecture (S) code le bloc de données à envoyer vers l'au moins une entité fonctionnelle (FE1, FE2, FE3) de sorte que le bloc de données ne perturbe pas, pour une réception voulue ou non voulue d'un support de données (D), l'état du support de données (D)

6. Procédé selon l'une des revendications précédentes 2 à 5, **caractérisé en ce que** les bits de donnés, modulés par le dispositif de modulation (24) du poste d'écriture/lecture (S) et/ou codés par le dispositif de codage (22), ne changent pas ou ne changent pas au-dessus d'une valeur limite prédéterminée, le spectre de fréquences rayonné par le système RFID.

7. Procédé selon l'une des revendications précédentes, **caractérisé en ce que** l'au moins une entité fonctionnelle (FE1, FE2, FE3) transmettent vers le poste d'écriture/ lecture (S) au moins un bloc de données par un dispositif de modulation (4).

8. Procédé selon la revendication 7, **caractérisé en ce que** l'au moins une entité fonctionnelle (FE1, FE2, FE3) transmet vers le poste d'écriture/lecture (S) au moins un bloc de données par le dispositif de modulation (4) sous forme de dispositif de modulation de charge.

9. Procédé selon l'une des revendications précédentes, **caractérisé en ce que** l'au moins une entité fonctionnelle (FE1, FE2, FE3) transmet au moins un bloc de données par un dispositif de codage (12) vers le poste d'écriture/lecture (S).

10. Procédé selon la revendication 9, **caractérisé en ce que** l'au moins une unité fonctionnelle (FE1, FE2, FE3) code et transmet au poste d'écriture/lecture (S) au moins un bloc de données au moyen d'un dispositif de codage (12), de sorte que les blocs de données sont décodables par le poste d'écriture/lecture (S) au moyen de son dispositif décodeur (31), qui est sous forme d'un support de données pour le décodage de données de réponse.

11. Procédé selon l'une des revendications précédentes, **caractérisé en ce que** l'au moins une unité fonctionnelle (FE1, FE2, FE3) transmet, au poste d'écriture/lecture (S), au moins un bloc de données avec un comportement de réponse semblable à un transpondeur, et que les blocs de données sont exploitables par le poste d'écriture/lecture (S) au moyen de son dispositif de décodage (31) qui est sous forme d'un support de données pour le décodage de données de réponse.

12. Procédé selon l'une des revendications précédentes, **caractérisé en ce que** le bloc de données et/ou le bloc de données de réponse comporte un cadre de protocole.

13. Procédé selon l'une des revendications précédentes, **caractérisé en ce que** le bloc de données et/ou le bloc de données de réponse comporte un début de trame (SOF) et une fin de trame (EOF).

14. Procédé selon l'une des revendications précédentes, **caractérisé en ce que** le bloc de données et/ou le bloc de données de réponse comporte au moins un bloc de contrôle.

15. Procédé selon l'une des revendications précédentes, **caractérisé en ce que** le bloc de données est constitué par un bloc de commande, un bloc de paramètres et des données.

16. Procédé selon la revendication 15, **caractérisé en ce que** le bloc de paramètres contient un code de fabricant de circuit intégré.

17. Procédé selon l'une des revendications précédentes, **caractérisé en ce que** le bloc de données de réponse contient au moins un bloc d'état.

18. Procédé selon l'une des revendications précédentes, **caractérisé en ce que** les blocs de données sont retransmis de l'hôte (H) vers l'au moins une unité fonctionnelle (FE1, FE2, FE3) et/ou de l'au moins une unité fonctionnelle (FE1, FE2, FE3) vers l'hôte (H) sans modification ou ensuite sans modification.

19. Procédé selon l'une des revendications précédentes, **caractérisé par le fait que** le poste d'écriture/lecture (S) retransmet ou transmet des données de l'hôte (H) vers l'au moins une unité fonctionnelle (FE1, FE2, FE3) et/ou des données de l'au moins une unité fonctionnelle (FE1, FE2, FE3) vers l'hôte (H), et où, dans le protocole hôte, sont prévus des ordres de pilotage pour le poste d'écriture/lecture pour le pilotage et la surveillance de l'au moins une unité fonctionnelle (FE1, FE2, FE3).

20. Poste d'écriture/lecture de mise en oeuvre du procédé de la revendication 1, **caractérisé en ce que** le poste d'écriture/lecture (S) comporte un dispositif de modulation pour moduler le signal porteur pour le bloc de données à envoyer à l'au moins une entité fonctionnelle (FE1, FE2, FE3), qui sera utilisé simultanément pour la modulation des données vers un support de données (D), dans lequel l'unité fonctionnelle est située en une position voulue dans une liaison de communication entre le poste d'écriture/lecture (S) et l'antenne.

21. Poste d'écriture/lecture selon la revendication 20, **caractérisé en ce que** le poste d'écriture/lecture (S) comporte un dispositif de codage pour le codage des bits de données pour le bloc de données à envoyer à l'au moins une entité fonctionnelle (FE1, FE2, FE3), qui simultanément sera utilisé pour le codage des données vers un support de données (D).

22. Poste d'écriture/lecture selon l'une des revendications 20 et 21, **caractérisé en ce que** le poste d'écriture/lecture (S) comporte un démodulateur et un dispositif de décodage pour un bloc de données de réponse de l'au moins une entité fonctionnelle (FE1, FE2, FE3), qui simultanément sera utilisé pour la démodulation et le décodage des données de réponse d'un support de données (D).

23. Poste d'écriture/lecture selon l'une des revendications 20 à 22, **caractérisé en ce que** le poste d'écriture/lecture (S) comporte une liaison de communication avec un calculateur (H).

24. Poste d'écriture/lecture selon l'une des revendications 20 à 23, **caractérisé en ce que** le poste d'écriture/lecture (S) est sous forme d'un poste d'écriture/lecture (S) transmettant des ordres uniquement vers l'au moins une unité fonctionnelle (FE1, FE2, FE3) depuis le calculateur (H) et/ou transmettant des blocs de données uniquement de l'au moins une unité fonctionnelle (FE1, FE2, FE3) vers le calculateur (H).

25. Poste d'écriture/lecture selon l'une des revendications 20 à 23, **caractérisé en ce que** le poste d'écriture/lecture (S) est sous forme d'un poste d'écriture/lecture (S) pilotant l'au moins une unité fonctionnelle (FE1, FE2, FE3).

26. Poste d'écriture/lecture selon la revendication 20, **caractérisé en ce que** le poste d'écriture/lecture (S) est sous forme d'un poste d'écriture/lecture (S) exploitant les blocs de données de réponse envoyés par l'au moins une unité fonctionnelle (FE1, FE2, FE3).

27. Poste d'écriture/lecture selon l'une des revendications 20 à 26, **caractérisé en ce que** le poste d'écriture/lecture (S) comporte un dispositif de pilotage pour piloter et surveiller l'au moins une unité fonctionnelle (FE1, FE2, FE3).

28. Unité fonctionnelle pour communiquer avec un poste d'écriture/lecture selon le procédé de la revendication 1, qui est disposée à un endroit voulu dans une liaison de communication entre le poste d'écriture/lecture (S) et l'antenne, dans laquelle est reçu au moins un bloc de données du poste d'écriture/lecture, et dans laquelle est exploité l'au moins un bloc de données reçu, **caractérisée en ce que** l'unité fonctionnelle comporte un dispositif d'entrée et/ou de sortie, et que la transmission de l'au moins un bloc de données est sous forme d'une transmission ayant lieu uniquement par une liaison de communication RFID du poste d'écriture/lecture (S) vers l'au moins une unité fonctionnelle (FE1, FE2, FE3) et/ou retour.

29. Unité fonctionnelle selon la revendication 28, **caractérisée par le fait que** l'unité fonctionnelle (FE1, FE2, FE3) comporte au moins un dispositif démodulateur (2).

30. Unité fonctionnelle selon la revendication 28 ou 29, **caractérisée en ce que** l'unité fonctionnelle (FE1, FE2, FE3) comporte au moins un dispositif décodeur (9).

31. Unité fonctionnelle selon l'une des revendications 28 à 30, **caractérisée en ce que** l'unité fonctionnelle (FE1, FE2, FE3) comporte au moins un dispositif modulateur (4).

32. Unité fonctionnelle selon la revendication 31, **caractérisée en ce que** le dispositif modulateur de l'unité fonctionnelle (FE1, FE2, FE3) est sous forme de dispositif de modulation de charge.

33. Unité fonctionnelle selon la revendication 28, 29 ou 30, **caractérisée en ce que** l'unité fonctionnelle (FE1, FE2, FE3) comporte au moins un dispositif de codage (12).

34. Unité fonctionnelle selon l'une des revendications 28 à 33, **caractérisée en ce que** l'unité fonctionnelle (FE1, FE2, FE3) est sous forme d'une unité fonctionnelle exécutant des actions déduites des blocs de données.

35. Unité fonctionnelle selon l'une des revendications 28 à 34, **caractérisée en ce que** l'unité fonctionnelle (FE1, FE2, FE3) est sous forme d'unité fonctionnelle (FE1, FE2, FE3) émettant les blocs de données de réponse vers le poste d'écriture/lecture (S).

36. Unité fonctionnelle selon l'une des revendications 28 à 35, **caractérisée par le fait que** l'unité-fonctionnelle (FE1, FE2, FE3) est sous forme d'unité fonctionnelle (FE1, FE2, FE3) transmettant des ordres au support de données (D).

37. Unité fonctionnelle selon l'une des revendications 28 à 36, **caractérisée par le fait que** l'unité fonctionnelle (FE1, FE2, FE3) est sous forme d'unité fonctionnelle (FE1, FE2, FE3) émettant un bloc de données avec un comportement de réponse identique à un transpondeur.
